# EUROPEAN PATENT APPLICATION

(11) **EP 2 353 391 A1**
(43) Date of publication of application: **10.08.2011**
(21) Application number: 11152732.1
(22) Date of filing: 31.01.2011
(51) Int. Cl.: A21D 13/00, A23L 1/00, A23P 1/08

(54) **Fat Bloom Inhibiting Food Compositions and Methods**

(30) Priority: 01.02.2010 US 300376 P
(71) Applicant: Kraft Foods Global Brands LLC, Northfield, IL 60093 (US)
(72) Inventor: Cadore, Margaret A., Hackettstown, NJ 07840 (US); Richar, Thomas M., Long Valley, NJ 07853 (US); Janulis, Theodore N., Randolph, NJ 07869 (US); Manns, James M., Stockholm, NJ 07460 (US)
(74) Representative: Setna, Rohan P.

(57) **Abstract**

Shelf stable non-refrigerated food products having base-cake, filling and coating components with fat bloom inhibiting characteristics and low fat migration. One embodiment provides a food composition having a base-cake having canola oil and having moisture content in a range of about 1.7 to 3.1 percent; a crème filling having a non-lauric fat, and having a water activity level of about 25; and a coating having lauric fat and a non-lauric fat, and having less than about 1 percent moisture.

## Description

### FIELD

The present products and methods relate to food compositions having fat bloom inhibiting characteristics, and specifically to fat bloom inhibiting products having base-cake, filling and coating components with low fat migration.

### BACKGROUND

Food compositions having fat and oil components often exhibit reduced shelf life due to fat "blooms" and oil migration among the various components. A fat bloom can be a white to pale-brown hazing or deposit that can appear on the surface of food compositions stored for extended periods. It can be manifest as either discrete particles or a continuous layer. The "bloom" can be caused by the migration of fat from one phase to another, and the subsequent (undesirable) crystallization of fat on the surface of a product, such as can be found on some chocolates.

Attempts are known in the art to restrict or eliminate fat blooms with product blends having various fat-and-oil compositions and ratios. As described in U.S. Pat. 5,928,704 to Takeda, et al., a tempering process during production can also be used to transform a composition to a stable fat crystal, though these processes can be time consuming, expensive and require high amounts of energy to produce.

As described in Takeda, chocolate can cause special blooming concerns in that shortening for chocolate can have triglycerides as a main ingredient, whose total carbon atoms are 50 or more, in particular, up to 56, and their crystallographic behavior is similar to cacao butter (a chocolate ingredient). Therefore, when chocolate is exposed to the high temperature, where almost all chocolate products melt, blooming is likely to occur.

Furthermore, as described in Takeda, low melting point fats and oils components can influence chocolate properties. When such chocolate is coated on a snack such as baked confectionery, the liquid fat can migrate to the baked confectionery portion. This migration causes can also cause blooming.

Oil migration among baked food components having varying desired moisture content and/or texture during shelf life is another challenge for these types of products. This can be especially difficult for products during an extended shelf life. Maintaining a specified component texture, moisture and flavor in a packaged baked food product is important to providing an organoleptically acceptable product to consumers throughout its entire shelf life.

Attempts are known in the art to address the blooming issue through the use of limited or even modified lauric acid containing oils (see e.g., U.S. Pub. 2005/0276900 to Ullanoormadam). Other attempts are also known in the art to include the use of barrier layers to inhibit oil migration among various food product components.

Food products having components that vary in texture and fat content and remain organoleptically acceptable over its shelf-life while having reduced oil migration and blooming characteristics are desired, It would be especially desirable to develop minimal oil migration and minimal blooming in a baked food product having components that vary widely in texture and fat composition, such as one having a crunchy base-cake, a crème filling, and a chocolate coating.

### SUMMARY

Accordingly, the present embodiments and methods described below provide shelf stable non-refrigerated food products having base-cake, filling and coating components, the products having fat bloom inhibiting characteristics and low fat migration.

One specific product embodiment provides a food composition, having a base-cake having canola oil and having moisture content in a range of about 1.7 to 3.1 percent; a crème filling having a non-lauric fat, and having a water activity level of about 25; and a coating having lauric fat and a non-lauric fat, and having less than about 1 percent moisture.

The base-cake can be in the range of about 25 to 35 percent of the total food product by weight and the canola oil is refined, bleached and deodorized canola oil. The base-cake canola oil can have up to 7 percent saturated fats.

In one embodiment, the base-cake can have an internal wall defining a well to receive the crème filling.

In a preferred embodiment, the crème filling fat is palm oil with TBHQ (tert-Butylhydroquinone) added. Also, the coating lauric fat can be a palm kernel oil and the coating non-lauric fat is palm oil. The proportion of the palm kernel oil should be greater than the proportion of the palm oil; and a fat percentage of the coating is in a range of about 22 to 26 percent.

In other preferred embodiments, the coating can have a high surface hardness, such as a fudge, and high melting temperature, such as 38 degrees Celsius. Optionally, the coating can have a wavy texture, whereby abrasive damage during shipping is reduced.

Other optional ingredients to the described embodiments can include flavors; sugar; salt; emulsifiers, and combinations thereof. The product can preferably be up to 13 grams in total piece weight, have low calorie count (e.g., in the range of about 40 to 60 calories per piece).

Methods to produce the preferred embodiments can include the steps of mixing dough for the base-cake composition; forming the dough to the base-cake shape; baking the base-cake; mixing the crème filling; transferring the crème filling to a hold/use kettle; depositing crème in the base-cake; cooling the base-cake/crème filling combination; enrobing the base-cake/crème filling combination with the coating; removing excess coating; and cooling the produce for a second time to solidify the coating placed on the product during enrobing.

Other features will become more apparent to persons having ordinary skill in the art from the following description and claims.

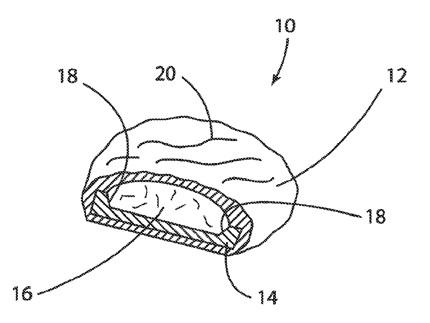

### BRIEF DESCRIPTION OF THE FIGURE

The foregoing features, as well as other features, will become apparent with reference to the description and figure below, in which like numerals represent like elements, and in which a cross-sectional perspective view of an exemplary food composition is illustrated.

### DETAILED DESCRIPTION

The embodiments described below provide shelf stable non-refrigerated food products having base-cake, filling and coating components. The products have fat bloom inhibiting characteristics and low fat migration among the components.

As described, the base-cake, filling and coating components each have different textures and fat components. Exemplary filling flavorings could include peanut butter crème, vanilla crème, mint crème, and the like. The base-cake and coating can be chocolate, vanilla, or other suitable flavoring combinations. The base-cake can preferably be in the range of about 20 to 35 percent of food product by weight. The base cake can optionally be formed into a well to receive the filling. There is low oil migration among the base-cake, filling and coating. This feature, including specific moisture level of each component, allows for a crispy base-cake to retain a crispy texture, while also inhibiting bloom.

Optional embodiments can include a coating having a wavy surface, which improves abrasion resistance. The coating can also have a high surface hardness and/or high melting temperature to: allow the product to remain intact until a packaged product is opened; improve resistance to damage during distribution; and reduce melt in the hand of a consumer. The food product can be configured to a variety product sizes and weights and can preferably be up to 13 grams in total piece weight, have low calorie count (e.g., in the range of about 40 to 60 calories per piece), be less than 1 cm thick and have a diameter of less than 5cm.

The Figure illustrates an exemplary product of the present composition generally indicated at 10. As shown, product 10 could generally be described as a cookie, having a filling, such as a crème filling 16, a base-cake 14 and a coating 12. Base-cake 14 can be crispy, such as a crunchy cookie/wafer and have chocolate flavoring. Base-cake 14 can also have an internal wall 18 defining a well to receive crème filling 16. Optionally, the surface of coating 12 can have waves 20 formed thereon, which can act to product abrasion during product packing, shipping and storing.

An exemplary composition and potential range for each component for base-cake 14 is set forth in Table 1 below.

**Table 1**

| **Base-cake Dough Ingredients (by percent weight)** | **Example** | **Range low** | **Range high** |
|---|---|---|---|
| FG Sugar | 22.91 | 20 | 25 |
| Dextrose | 2 | 0.8 | 2 |
| Fructose | 1 | 0.8 | 2 |
| Cocoa | 8.50 | 6 | 10 |
| Vanillin Crystals | 0.01 | 0 | 1 |
| Dough Salt | 0.50 | 0.04 | 1 |
| Cal Phos Monobasic | 0.25 | 0.1 | 0.5 |
| Sod Bicarb Powder TCP | 0.50 | 0.4 | 9.9 |
| Water | 8 | 7 | 9 |
| Canola oil | 10 | 8 | 12 |
| Lecithin | 0.30 | 0.2 | 0.7 |
| Chocolate Liquor Unsweetened | 0.03 | 0 | 1 |
| Wheat Flour | 46 | 43 | 48 |

Base-cake 14 can be up to 35 percent of the total food product by weight, preferably about 25-35 percent, and most preferably about 29 percent. Moisture content for base-cake 14 can be in the range of about 1.5 to 3.5 per cent, preferably between 1.7 and 3.1 percent, and most preferably at 2.4 percent. Base-cake 14 can use RBD (refined, bleached, and deodorized) canola oil for its fat content (described in the table as non-hydrogenated shortening). Canola oil can be used in base-cake 14 to keep the saturated fat content low in the finished food product. The RBD Canola can have 7 percent saturated fats similar to high oleic canola oil. Sodium bicarbonate powder (TCP- tri-calcium phosphate) can be added as a baking agent and lecithin as an emulsifier; and tert-Butylhydroquinone (TBHQ) and citric acid can be added as a preservative. TBHQ can be in the range of about 175-225 ppm.

Three exemplary compositions for crème filling 16 are set forth in Table 2 below.

**Table 2**

| **Filling Ingredients by percent weight** | **Example 1 (range)** | **Example 2 (range)** | **Example 3 (range)** |
|---|---|---|---|
| Non-Hydrogenated Shortening | 36 | 13 | 35 |
| | (32 - 38) | (0 - 20) | (30 - 40) |
| Vanillin Crystals | 0.06 | 0 | 0 |
| | (0.01 - 0.1) | | |
| Lecithin | 0.1 | 0.2 | 0.1 |
| | (0.09 - 0.20) | (0.1 - 0.3) | (0.09 - 0,20) |
| Sugar | 63.84 | 43 | 57.82 |
| | (60 - 68) | (35 - 50) | (53 ∼ 65) |
| Peanut Butter | 0 | 43.5 | 0 |
| | | (35 - 50) | |
| Flour Salt | 0 | 0.3 | 0 |
| | | (0.25 - 0.4) | |
| Peppermint Oil | 0 | 0 | 0.08 |
| | | | (0.05 - 0.20) |
| Dextrose monohydrate | 0 | 0 | 7 |
| | | | (3 - 10) |

The fat for crème filling 16 can be a non-lauric fat (labeled here as non-hydrogenated shortening). Lauric fats can include coconut oil and palm kernel oil (not to be confused with palm oil, a non-lauric fat). Lauric acid is a main component of a lauric fat. Lauric acid is inexpensive, has a long shelf-life, is nontoxic and safe to handle. Lauric acid is a solid at room temperature, but melts easily.

An exemplary non-lauric fat for crème filling 16 can include a refined bleached and deodorized (RBD) palm oil that is a no-trans, non-hydrogenated, all purpose shortening with lower saturates and TBHQ added for greater stability (such as one sold under the trade name Sans Trans HF T15 by Loders Croklann of Channahon, Illinois). This fat configuration enables crème filling 16 to be soft when being deposited on base-cake 14 and then harden when cooled so as not to ooze or create smearing.

An optional crème filling 16 embodiment could include a peanut component (see Example 2). In this embodiment the filling can contain a RBD palm oil and peanut butter containing peanut oil, hydrogenated rapeseed oil, cottonseed oil and soybean oil. Crème filling 16 can have a water activity level in the range of about 20 to 30, but preferably at about 25.

Coating 12 can have a lauric/non-lauric fat combination, where the lauric fat is the main component (i.e., in higher proportion to the non-lauric fat component). In an exemplary embodiment, less than about 50 percent of coating 12 by weight is the palm kernel/palm oil combination, but is preferably in the range of about 22 to 26 percent fat. These fats allow coating 12 to harden quickly and provide less blooming compared to a coating having only a non-lauric fat. Coating 12 can have a high surface hardness and high melting temperature, such as 38 degrees Celsius. The coating can have a 'wavy' texture 20 to resist abrasive damage during shipping. Coating 16 is preferably less than 1 percent moisture, but most preferably in the range of about 0.5 percent to 0.9 percent.

Overall, each component of product 10 can have a different texture and fat composition and can use both lauric and non-lauric fats as described above. Typically, it would be expected that some migration of the liquid elements of the RBD canola oil to the more saturated palm oils would occur, This could cause blooming. Nevertheless, an eight week study blooming study (see below) found no significant blooming. Further, there is low oil migration among the components so that base-cake 14 can retain a crispy texture. This can be assisted by optionally using the similar fat configurations for the coating and the filling.

Product 10 as described can achieve low oil migration and low blooming not only because of the combination of fats but also because of the described moisture levels. For example if crème filling 16 moisture content is too high, water will migrate to base-cake 14 making it soggy and cause separation.

Bloom determination studies of exemplary products 10 (namely using the crème filling from Example 1) involved a spectrophotometer (such as one sold under the trade name CM-3610d by Minolta). Product was stored under both isothermal conditions (18.3° C) and temperature cycled conditions (18.3° C for 12 hours 87.8° C for 12 hours). These cycles simulated conditions considered very abusive to chocolate and sufficient to "push" products that might be prone to bloom. Thus, the studies were designed to accelerate product bloom.

Using the spectrophotometer, initial product color readings were taken at time = 0 when the sample was received. Readings were then taken weekly for 8 weeks. For fat bloom, the value was tracked (0 representing completely black and 100 representing completely white). An increase of two (2) units (on the scale of 0 to 100) was considered a sign of fat bloom. In an example with high bloom potential, this can occur in as little as 1-2 weeks. A product surging 8 weeks of testing was considered to exhibit minimal fat bloom. In the product tests of the embodiments described herein, none of the samples showed significant bloom under either the cycled or isothermal conditions for the entire 8 week test period.

A method to produce an exemplary product as described above can include the steps that follow. The first step can include mixing dough that will be used to bake into the base-cake. This mixing step can include a series of stages in a horizontal single shaft upright dual arm mixer. Once the dough is mixed, it can be machined to form to product shape utilizing a rotary molder. The dough can be pressed into a cavity having a mold die, then extracted to a belt which can then transfer the dough pieces to an oven band.

Next the dough can be baked in a forced hot air convection type oven that bakes via direct convection and radiation.

The crème component can be mixed in a liquid jacketed kettle. The components of the crème can be placed in the kettle in a deliberate order to achieve desired texture and flow properties. The mixing can occur by counter dual rotating elements with one scraping the wall of the kettle to facilitate heat transfer. When the mix is complete, the crème can be transferred to a hold/use kettle. An exemplary order of mixing the crème can include melting the shortening to a creamy liquid that is not clarified and not lumpy. Next sugar can be added and the temperature of the crème mixture adjusted to 40.5 degree C for the batch process.

Once the base-cake has been transferred to a depositor via a conveyor, the crème filling can be deposited on the base-cake. The base-cake can enter a series of guides to align and time it with a crème filling depositing manifold. The crème can be deposited on the base-cake using a series of nozzles that match the base-cake pitch, and move back and forth to match base-cake speed. The crème deposit can be intermittent and timed to deliver the desired weight. The crème can be held in a kettle and pumped under pressure to the depositing manifold. All transfer piping can be heat traced to control and maintain cream temperature. Optionally, the crème filling can be added directly after the base-cake leaves the oven.

A next step can include cooling the base-cake/crème combination by conveying it through a spiral cooling conveyer system, which solidifies the fat in the crème filling.

After the product has cooled, it can be transferred to an enrober to apply the coating. The enrober can convey the base-cake/crème combination on an open mesh wire belt through a coating waterfall and puddle the excess liquid from the liquid coating. The excess coating can be removed by blowing air over the top of the coated product. Varying air velocity can determine the amount of coating left on the product. In preferred methods, two blowers can be used both with a high and low speed to remove excess coating. By increasing the speed of the second blower, waves 20 can be developed on the surface of coating 12. Excess bottom coating can also be removed by a spinning rod located at the transfer from the enrober to a cooling tunnel.

Once the base-cake/crème combination has been coated, the product can convey to a second flat cooling system to solidify the coating.

While the products and methods have been described in conjunction with specific embodiments, it is evident that many alternatives, modifications, and variations will be apparent to those skilled in the art in light of the foregoing description.

## Claims

1. A food composition, comprising:
a base-cake having canola oil and having moisture content in a range of about 1.7 to 3.1 percent;
a crème filling having a non-lauric fat, and having a water activity level of about 25; and
a coating having lauric fat and a non-lauric fat, and having less than about 1 percent moisture.

2. The food composition of claim 1, wherein the base-cake is in the range of about 25 to 35 percent of the total food product by weight and the canola oil is refined, bleached and deodorized canola oil.

3. The food composition of claim 1 or claim 2, wherein:
(i) the base-cake canola oil is less than or equal to 7 percent saturated fats; and/or
(ii) the base-cake has an internal wall defining a well to receive the crème filling; and/or
(iii) wherein the crème filling fat is palm oil with TBHQ added.

4. The food composition of any preceding claim, wherein the coating lauric fat is a palm kernel oil and the coating non-lauric fat is palm oil;
wherein a proportion of the palm kernel oil is greater than a proportion of the palm oil; and
wherein a fat percentage of the coating is in a range of about 22 to 26 percent.

5. The food composition of any preceding claim, wherein the coating has high surface hardness and a melting temperature up to 38 degrees Celsius; and/or wherein the coating has a wavy texture, whereby abrasive damage during shipping is reduced.

6. The food composition of any preceding claim, further comprising additional components selected from the group consisting of flavors; sugar; salt; emulsifiers; and combinations thereof.

7. The food composition of any preceding claim, wherein the product is up to 13 grams in total piece weight and has a calorie count in the range of about 40 to 60 calories per piece.

8. A method to produce a food composition of any of the preceding claims, comprising the steps of:
mixing dough for the base-cake composition;
forming the dough to the base-cake shape;
baking the base-cake;
mixing the crème filling;
transferring the crème filling to a hold/use kettle;
depositing crème in the base-cake;
cooling the base-cake/crème filling combination;
enrobing the base-cake/crème filling combination with the coating;
removing excess coating; and
cooling the produce for a second time to solidify the coating placed on the product during enrobing.

9. The method of claim 8, wherein the step of mixing dough for the base-cake composition uses a stage in a horizontal single shaft upright dual arm mixer; and/or wherein the step of forming the dough to the base-cake shape uses a rotary molder.

10. The method of claim 8 or claim 9, wherein the step of baking the base-cake uses a forced hot air convection type oven that bakes via direct convection and radiation.

11. The method of any one of claims 8 to 10, wherein the step of mixing the crème filling:
(a) uses a liquid jacketed kettle; and/or
(b) uses counter dual rotating elements with one scraping the wall of the kettle to facilitate heat transfer.

12. The method of any one of claims 8 to 11, wherein the step of depositing crème in the base-cake comprises the steps of:
aligning the base-cake along a series of guides to align and time it with a depositing manifold; and
depositing crème intermittently and timed to deliver the desired crème weight.

13. The method of any one of claims 8 to 12, wherein the step of cooling the base-cake/crème filling combination comprises the step of moving the combination through a spiral cooling conveyer system, wherein fat in the crème is solidified.

14. The method of any one of claims 8 to 13, wherein the step of enrobing the base-cake/crème filling combination with the coating uses an open mesh wire belt through a waterfall.

15. The method of any one of claims 8 to 14, wherein the step of removing excess coating comprises the steps of:
blowing air over a top of the product; and
exposing the product further to a spinning rod located at a transfer point from the enrober to a cooling tunnel.
